# EUROPÄISCHE PATENTSCHRIFT

(11) **EP 1 070 109 B1**
(45) Veröffentlichungstag und Bekanntmachung des Hinweises auf die Patenterteilung: **19.03.2003**
(21) Anmeldenummer: 99920629.5
(22) Anmeldetag: 09.04.1999
(51) Int. Cl.: C10M 103/00, C01G 19/00, C10N 10/12

(54) **FESTSCHMIERSTOFFE AUF BASIS VON ZINNSULFID UND KOHLENSTOFF**
SOLID LUBRICANTS WITH A TIN SULPHIDE AND CARBON BASE
LUBRIFIANTS SOLIDES A BASE DE SULFURE D'ETAIN ET DE CARBONE

(30) Priorität: 09.04.1998 DE 19815992
(43) Veröffentlichungstag der Anmeldung: 24.01.2001
(73) Patentinhaber: Chemetall Ges.m.b.H., 1010 Wien (AT)
(72) Erfinder: HÜNER, Ronald, A-9500 Villach (AT); MELCHER, Bernhard, A-9020 Klagenfurt (AT); MILCZARECK, Roman, 9601 Arnoldstein (AT); KIENLEITNER, Herbert, A-9587 Riegersdorf (AT)
(74) Vertreter: Viering, Jentschura & Partner
(86) Internationale Anmeldenummer: EP9902426
(87) Internationale Veröffentlichungsnummer: WO99052997

(56) Entgegenhaltungen:
- EP-A- 0 108 892
- EP-A- 0 328 514
- EP-A- 0 654 616
- WO-A-95/02657
- CH-A- 644 890
- DE-C- 3 513 031
- US-A- 5 288 792

## Beschreibung

Die vorliegende Erfindung betrifft Festschmierstoffe und Festschmierstoffkombination auf Basis von Zinnsulfid und Kohlenstoff, ein Verfahren zu deren Herstellung sowie deren Verwendung in Reibbelagsmischungen und Reibbelägen wie Bremsoder Kupplungsbelägen.

Neben der klassischen Verwendung als Festschmierstoff, bei der ein Schmierfilm zwischen zwei Oberflächen, die relativ zueinander gleiten sollen, ausgebildet werden soll, werden Verbindungen wie Molybdänsulfid auch noch auf einem anderen tribologischen Fachgebiet eingesetzt, nämlich bei der Herstellung von Reibelementen wie Bremsklötze, Bremsbacken oder Brems- und Kupplungsbeläge. Der Zweck dieser Reibelemente ist jedoch nicht die Vermeidung, sondern gerade die Erzeugung von Reibung. Daher ist beim Einsatz von Festschmierstoffen in solchen Reibelementen nicht die Verminderung der Reibung, sondern die Stabilisierung des Reibverlaufs das Ziel. Durch diese Stabilisierung kommt es zur Abnahme abrasiver Vorgänge, was sich positiv auf das Verschleiß- und Vibrationsverhalten auswirkt.

Neben dem eingangs schon erwähnten Molybdänsulfid ist Graphit wohl der bekannteste spezielle Festschmierstoff, der in Reibbelägen eingesetzt wird.

Jedoch sind schon seit längerem auch noch weitere Festschmierstoffe für Reibbeläge auf der Basis von Graphiten, Sulfiden sowie Kombination dieser Verbindungen mit Fluoriden und Phosphaten bekannt. Ein bekannter und weit verbreiteter Festschmierstoff ist z. B. Bleisulfid. Aufgrund der zunehmenden ökologischen Sensibilisierung gegenüber Schwermetallen und den damit verbundenen Bestrebungen, deren Einsatz zu reduzieren, steht auch Bleisulfid nur noch in immer eingeschränkterem Maß zur Verfügung. Ein weiterer Vertreter aus der Gruppe der Metallsulfide, der eine verbreitete Verwendung in Reibbelägen gefunden hat, ist Antimonsulfid.

So beschreibt z. B. die US-PS 39 65 016 die Verwendung komplexer Antimonsulfide insbesondere auf Basis von Ölen und Fetten als Zusatz zu Schmiermitteln, durch den die Hochdruckeigenschaften und das Verscheißverhalten dieser Materialen stark verbessert werden sollen. Des weiteren ist beispielsweise aus der deutschen Patentschrift DE 35 13 031 eine Festschmierstoffkombination bekannt, die aus Graphit, Zinksulfid, Antimon(III)-sulfid sowie einem Erdalkalimetallphosphat oder einem sonstigen als Festschmierstoff gebräuchlichen anorganischen Metallphosphat besteht. Der DE 35 13 031 zufolge weisen Reibbeläge, die unter Verwendung dieser Festschmierstoffkombination hergestellt werden, einen relativ niedrigen Verschleißwert und einen nur in einem engen Bereich schwankenden Reibwert aus. Des weiteren sollen sie eine Kraftübertragung von Belagmaterial auf die Bremsscheiben vermeiden. Aus ökologischer und toxikologischer Sicht ist jedoch neuerdings auch die Verwendung von auf Antimonsulfid basierenden Festschmierstoffe in Reibbelägen als bedenklich zu erachten. Unabhängig von der Oxidationsstufe des Metalls reagiert Antimonsulfid infolge der durch den Reibungsvorgang entstehenden Wärme mit Luftsauerstoff zu Antimonoxid. Dieses steht jedoch seit kurzem im Verdacht, eine cancerogene Wirkung zu besitzen, weshalb auch von der Verwendung von Antimonsulfid in Reibbelägen abzuraten ist.

EP-A-108892 beschreibt Konstruktionswerkstoffen mit guten Gleiteigenschaften, wobei ein Kohlenstoff/Schwefel/Metallpulver-Gemisch gepreßt und bei Temperaturen bis 700°C unter anhaltendem Druck nachtemperiert wird. Als Metallpulver sind Eisen, Kobalt, Nickel, Kupfer, Molybdän, Zinn oder Antimon geeignet. Metall und Schwefel sind im stöchiometrischem verhältnis verwendet. In der Matrix ist Kohlenstoff (Graphit) offensichtlich in höherem Anteil aufgenomen (Beispiele).

EP-A-328514 beschreibt Festschmierstoffkombinationen für Reibbeläge auf Basis von Graphit, Zinksulfid statt Zinnsulfid und mindestens einem anorganischen Metallphosphat.

EP-A-654616 beschreibt Festschmierstoffkombinationen für Reibbeläge für Bremsund Kupplungsbeläge bestehend u. a aus Aramidfasern, Bindemittlen, Füllstoffen, Zinnsulfid (SnS,SnS₂) Schmierstoff aber keinem Metallphosphat.

Der vorliegenden Erfindung liegt daher die Aufgabe zugrunde, einen Festschmierstoff sowie eine Festschmierstoffkombination bereitzustellen, die vergleichbare oder sogar bessere tribologischen Eigenschaften als die aus dem Stand der Technik bekannten Festschmierstoffe und von diesen abgeleiteten Kombinationen aufweisen, jedoch frei von ökologisch oder toxikologisch bedenklichen Verbindungen sind.

Überraschenderweise wurde von den Erfindern gefunden, das solche Festschmierstoffe durch Umsetzung von metallischem Zinn in fein verteilter Form mit Schwefel und Kohlenstoff unter Inertgas oder Luftatmosphäre bei Temperaturen von 200° bis 1500°C, bevorzugt 800-1200°C, für 0,1 bis 6 Stunden bevorzugt 40 bis 80 Minuten, wobei Schwefel in einer mindestens stöchiometrischen Menge, berechnet auf die alleinige Bildung von SnS₂, und Kohlenstoff in einer Menge von 0,5 bis 20 Gew.-%, bezogen auf das Gesamtgewicht des Reaktionsansatzes, im Reaktionsansatz eingesetzt werden, erhältlich sind.

Überraschenderweise eröffnet das hier aufgefundene Verfahren auch eine bislang unbekannte Alternative zur Herstellung von Zinnsulfiden, die überwiegend Zinn(IV)-sulfid enthalten.

Bei dem erfindungsgemäßen Verfahren besitzt der Kohlenstoff offensichtlich eine der Wirkung von Ammoniumchlorid oder anderen bekannten sauren Katalysatoren vergleichbare Wirkung, was sich bei durch die Bildung großer Mengen SnS₂ im so erhältlichen Festschmierstoff dokumentiert. Der Kohlenstoff verbleibt in der als Reaktionsprodukt entstehenden Zinnsulfidmatrix und liegt den Untersuchungen der Erfinder zufolge in dieser statistisch verteilt vor.

Die die Zinnsulfidmatrix bildenden Zinnsulfide lassen sich rein rechnerisch als nach außen ungeladene Verbindung der Formel

SnₓS_{y}

als Mischung von Zinn-Sulfiden der SnS, Sn₂S₃ und SnS₂ Formel darstellen, wobei die Indizes in der Formel Werte zwischen x = 1-5 und y = 5-10 annehmen können.

Die von den Erfindern durchgeführten Untersuchungen haben ferner ergeben, daß die Bildung der einzelnen Sulfide von den genauen Reaktionsbedingungen abhängig ist. In der Regel enthält der nach dem erfindungsgemäßen Verfahren erhältliche Festschmierstoff ca. 50-90 Gew.-% Zinn(IV)-sulfid und 10-50 Gew.-% andere Zinnsulfide, insbesondere Zinn(II)-sulfid, bezogen auf die Gesamtstoffmenge der darin enthaltenen Zinnsulfide. Der Kohlenstoffanteil beträgt dabei ca. 0,5-20 Gew.-% bezogen auf das Gesamtgewicht des Festschmierstoffs.

Bei dem erfindungsgemäßen Verfahren zur Herstellung des Festschmierstoffs wird zunächst metallisches Zinn in fein verteilter Form mit Schwefel und Kohlenstoff vermischt. Dabei wird der Schwefel in einer mindestens stöchiometrischen Menge, die für die vollständige Umsetzung des Zinns zu SnS₂ berechnet wird, eingesetzt. Bevorzugt wird ein geringer stöchiometrischer Überschuß an Schwefel von bis zu 5 %, berechnet auf die Bildung von SnS₂, verwendet. Der Kohlenstoff wird in einer Menge von 0,5 bis 20 Gew.-%, bezogen auf das Gesamtgewicht des Reaktionsansatzes, eingesetzt. Nach dem Mischen wird das Reaktionsgemisch unter Inertgas oder Luftatmosphäre bei Temperaturen von 200° bis 1500°C für 0,1 bis 6 Stunden umgesetzt. Nach dem Ende der Reaktion läßt man das so erhaltene Produkt erkalten, das anschließend noch vermahlen wird.

Gemäß einer bevorzugten Ausführungsform wird der Kohlenstoff in einer Menge von 2-8 Gew.-% und insbesondere in einer Menge von 5 Gew.-%, bezogen auf das Gewicht der fertigen Reaktionsmischung, bei dem erfindungsgemäßen Verfahren eingesetzt.

Gemäß einer anderen bevorzugten Ausführungsform der vorliegenden Erfindung wird der Kohlenstoff in Form von Graphit im Reaktionsansatz eingesetzt. Der Graphit kann sowohl natürlichen als auch synthetischen Ursprung sein. Es ist jedoch auch möglich, andere Modifikation des Kohlenstoffs wie z. B. Ruß zu verwenden.

Das nach dem erfindungsgemäßen Verfahren erhältliche Zinnsulfid-Reaktionsprodukt kann sowohl als Festschmierstoff allgemein sowie speziell als Zusatz von Reibbelagsmischungen eingesetzt werden. Bei der Verwendung als Additiv für Reibbelagsmischungen wird der Zinnsulfid und Graphit enthaltende Festschmierstoff in einer Menge von 0,5 % bis 15 Gew.-%, vorzugsweise in einer Menge von 5 Gew.-% eingesetzt. Diese so erhältlichen Reibbelagsmischungen ihrerseits finden vorrangig Anwendung in Reibbelägen, vorzugsweise in harzgebundenen Reibbelägen und insbesondere in Reibbelägen wie Kupplungs- oder Bremsbelägen. Der durch den erfindungsgemäßen Festschmierstoff erzielte positive Einfluß auf das Verschleißverhalten solcher Reibbeläge ist mit dem diesbezüglichen Effekt von Antimon(III)-oxid vergleichbar oder sogar besser. Ferner gehen mit dem so erreichten guten Verschleißverhalten vorteilhafte Eigenschaften wie z. B. eine geringe Geräuschentwicklung und ein gleichmäßiger hoher Reibwert einher.

Der gemäß dem hier beschriebenen Verfahren erhältliche Festschmierstoff kann jedoch nicht nur als alleiniger Zusatz zu Reibbelagsmischungen verwendet werden, sondern wird gemäß einer Weiterbildung der vorliegenden Erfindung auch zur Herstellung einer Festschmierstoffkombination eingesetzt. Die unter Verwendung dieser Festschmierstoffkombination gefertigten Reibbelägen besitzen ebenfalls ein zumindest gleichwertiges Verschleißverhalten wie die Reibbeläge, die mit Hilfe von antimonsulfidhaltigen Festschmierstoffkombinationen hergestellt werden.

Die Festschmierstoffkombination der vorliegenden Erfindung wird hergestellt, indem 2 bis 50 Gew.-% des oben beschriebenen Festschmierstoffs auf Zinnsulfidbasis mit 2 bis 40 Gew.% Graphit, 2 bis 40 Gew.-% Zinksulfid, 2 bis 30 Gew.% Zinn(II)-sulfid, 1 bis 5 Gew.-% freiem Schwefel sowie 2 bis 40 Gew.-% eines Erdalkalimetallphosphats oder eines Metallphosphats in einem Intensivmischer, beispielsweise in einem Taumelmischer, jeweils in fein verteilter Form vorgelegt und die Komponenten anschließend darin miteinander vermischt werden. Nach dem Mischvorgang wird die Festschmierstoffkombination noch vermahlen, um eine relativ einheitliche Partikelgröße zu erhalten. Die Partikelgröße sollte nach dem Mahlen im Bereich von ca 5 bis 45 µm liegen, um bei der Verwendung als Additiv im Mischvorgang mit den übrigen Bestandteilen eine ausreichende Mischbarkeit zu gewährleisten.

Zur Herstellung der Festschmierstoffkombination können prinzipiell alle als Festschmierstoffe verwendbaren Erdalkalimetallphosphate und Metallphosphate herangezogen werden. Vorzugsweise wird Calciumphosphat, Magnesiumphosphat, Aluminiumphosphat, Eisenphosphat oder Zinkpyrophosphat verwendet. Ferner können auch Mischungen aus mindestens zwei dieser Metall- bzw. Erdalkalimetallphosphate eingesetzt werden.

Diese so erhältliche Festschmierstoffkombination findet, wie schon oben erwähnt, ebenfalls Anwendung bei der Herstellung von Reibbelagmischungen. Sie wird dabei in einer Menge von 0,5 bis 15,0 Gew.-%, bezogen auf das Gesamtgewicht der Reibbelagmischung, eingesetzt. Auch diese Mischungen können ihrerseits wiederum zu Reibbelägen, insbesondere zu Reibbelägen wie Kupplungs- oder Bremsbelägen verarbeitet werden.

Anhand der folgenden nicht einschränkenden Beispiele soll die vorliegende Erfindung näher veranschaulicht werden.

### Beispiel 1: Herstellungsbeispiel

119 g Zinnpulver wurden mit 71 g Schwefel, entsprechend einem stöchiometrischen Überschuß von 10 %, bezogen auf die Bildung von SnS₂, sowie mit etwa 9 g Graphit (entsprechend 5 Gew.-% der fertigen Reaktionsmischung) vermischt. Der Reaktionsansatz wurde anschließend in einem herkömmlichen Muffelofen bei 200-800°C unter Schutzgasatmosphäre für 6 Stunden umgesetzt. Nach dem Abkühlen wurde das Reaktionsprodukt vermahlen und auf seine chemische Zusammensetzung untersucht.

Die Analyse dieses zur Veranschaulichung der vorliegenden Verfahrens so hergestellten Materials ergab, daß der molare Anteil von Zinn(IV)-sulfid in der entstandenen Zinnsulfidmatrix ca. 70 % Gew.-% betrug und die verbleibenden 30 Gew.-% des sulfidischen Anteils überwiegend als (II)-sulfid vorlagen.

Anschließend wurde dieses nach dem erfindungsgemäßen Verfahren erhältliche kohlenstoffhaltige Zinnsulfid, wie im folgenden Beispiel 2 beschrieben, in Reibbelagmischungen eingearbeitet und deren tribologischen Eigenschaften untersucht.

### Beispiel 2: Anwendung der erfindungsgemäßen Festschmierstoffs

Zum Vergleich des nach dem obigen Verfahren erhältlichen graphithaltigen Festschmierstoffs auf Zinnsulfidbasis mit bekannten Festschmierstoffen wurden typische Scheibenbremsbelagrezepturen eingesetzt (Tab.1). Die Rezepturen ohne Festschmierstoff, die als Referenz in den Testreihen ebenfalls untersucht wurden, wurde zunächst in einem Pflugscharmischer mit Messerkopf vermischt. Anschließend wurden diese dann in einer druck- und temperaturgeregelten Laborpresse zu fahrzeugüblichen Scheibenbremsbelägen verpreßt. Zur Herstellung der festschmierstoffhaltigen Prüflinge wurden zwischen diesen beiden Schritten die zu vergleichenden Festschmierstoffe in gleichen Anteilen in die jeweilige Vormischung eingemischt. Die so hergestellten Prüfbeläge wurden anschließend auf einem Krauss-Prüfstand getestet.

**Tabelle 1:**

| Zusammensetzung der festschmierstoffhaltigen Bremsbelagsprüfrezepturen | | |
|---|---|---|
| **Bestandteil** | **Rezeptur A (Gew.-%)** | **Rezeptur B (Gew.-%)** |
| Stahlwolle | 10 | 10 |
| Metallpulver | 15 | 15 |
| Fasern | 8,7 | 9 |
| Organische Anteile | 11 | 11 |
| Reibstoffe | 9 | 9 |
| Füllstoffe | 20 | 20 |
| Graphit | 20,3 | 20 |
| Festschmierstoff | 6 | 6 |

Bei dem nachfolgenden Testprogramm wurde besonders auf die Verschleißeigenschaften bei hohen Belastungen geachtet, da unter diesen Bedingungen die günstigen Eigenschaften des kohlenstoffhaltigen Zinnsulfids besonders deutlich zum Tragen kommen. Das Testprogramm umfaßte im einzelnen
1.) eine Einlaufphase mit 100 Stops zur Konditionierung der Oberflächen ,
2.) einen Test zur Bestimmung des Temperatureinfluß bestehend aus 6 Zyklen je 10 Stopps in Serie, bei einer Bremsbelagtemperatur von 100, 200 oder 400 °C, bei einer Geschwindigkeit entsprechend 140 km/h und einem Druck von 20 bar.

Zur Beurteilung des Verschleißverhaltens wurde die Gewichtsabnahme in Gramm pro Belag ermittelt. Zur besseren Vergleichbarkeit sind die in Tab. 2 und 3 angegebenen Verschleißwerte auf die Gewichtsabnahme bei 100 °C des entsprechenden Referenzbelags (Belag 0), der bis auf den fehlenden Festschmierstoff die jeweils gleiche Zusammensetzung aufwies, bezogen.

In einer ersten Testreihe wurde der Effekt des erfindungsgemäßen Zinnsulfids im Vergleich zu herkömmlichem Zinn(II)-sulfid untersucht. Dazu wurde das im Herstellungsbeispiel erhaltene graphithaltige Zinnsulfid bzw. handelsübliches Zinn(II)-sulfid in die oben genannte Prüfrezeptur A eingearbeitet und anschließend das Verschleißverhalten der mit den Rezepturen hergestellten Bremsbeläge untersucht. Um zu vermeiden, daß die Testergebnisse durch einen unterschiedlichen Graphitgehalt in den Belägen verfälscht wurden (die Menge an Graphit in Belag 1a war aufgrund der Anwesenheit von Graphit in dem Festschmierstoff, der im obigen Herstellungsbeispiel erhalten worden war, bei sonst gleicher Zusammensetzung um 0,3 Gew.-% erhöht), wurde der Zinn(II)-sulfidhaltigen Mischung 1 noch die entsprechende Menge Graphit zugesetzt.

Bei dem zuvor beschriebenen Test wurden folgenden Werte für den Verschleiß erhalten (Tab.2).

**Tabelle 2**

| **Verschleiß** | **100 °C** | **200 °C** | **400 °C** |
|---|---|---|---|
| Belag 0 | 1 | 2,2 | 4,5 |
| Belag 1 | 0,67 | 1,3 | 3,5 |
| Belag 1a | 0,43 | 0,68 | 2,4 |

Anhand dieser Werte ist ersichtlich, daß der Zusatz des erfindungsgemäßen Festschmierstoffs den Verschleiß von Reibbelägen, verglichen mit den unter Verwendung von herkömmlichen Zinn(II)-sulfid hergestellten Reibbelägen, deutlich verringert.

In einer zweiten Testreihe wurde der Einfluß des graphithaltigen Zinnsulfids auf das Verschleißverhalten von Reibbelägen mit dem von Antimon(III)-sulfid verglichen. Dazu wurde die Rezeptur B, die jeweils 6 Gew-.% reines Sb₂S₃ bzw. des im Herstellungsbeispiel 1 synthetisierten Materials enthielt, zu den entsprechenden Prüfbelägen 1 und 2 verarbeitet. Bei deren Untersuchung wurden die in Tab. 3 angegebenen Werte erhalten.

**Tabelle 3**

| **Verschleiß** | **100 °C** | **200 °C** | **400 °C** |
|---|---|---|---|
| Belag 0 | 1 | 1,4 | 5,9 |
| Belag 1 | 0,60 | 1,3 | 2,4 |
| Belag 2 | 0,63 | 1,0 | 1,9 |

Dieser Vergleich zeigt, daß durch den Zusatz des erfindungsgemäßen Festschmierstoffs (Belag 2) bei niedrigen Temperaturen ein annähernd identisches Verschleißverhalten wie durch die Verwendung von Sb₂S₃ (Belag 1) resultiert. Bei höheren Temperaturen bewirkt das graphithaltige Zinnsulfid jedoch sogar deutlich verbesserten Verschleißeigenschaften. Den hier erhaltenen Ergebnissen nach sowie auch in Anbetracht eines bislang nicht bekannten toxikologischen Potentials, sollte der erfindungsgemäße Festschmierstoff auf Basis von Zinnsulfid eine verbreitete Anwendung als tribologischer Ersatzstoff für Antimonsulfid finden.

## Patentansprüche

1. Festschmierstoff auf Zinnsulfidbasis, erhältlich durch Umsetzung von metallischem Zinn in fein verteilter Form mit Schwefel und Kohlenstoff unter Inertgas oder Luftatmosphäre bei Temperaturen von 200 bis 1500°C für 0,1 bis 6 Stunden, wobei Schwefel in einer überstöchiometrischen Menge, berechnet auf die alleinige Bildung von SnS₂, und Kohlenstoff in einer Menge von 0,5 bis 20 Gew.-%, bezogen auf das Gesamtgewicht des Reaktionsansatzes, im Reaktionsansatz eingesetzt werden.

2. Festschmierstoff gemäß Anspruch 1, **dadurch gekennzeichnet, dass** der Schwefel in einem stöchiometrischen Überschuss von bis zu 5 %, berechnet auf die alleinige Bildung von SnS₂, im Reaktionsansatz eingesetzt wird.

3. Festschmierstoff gemäß Anspruch 1 oder 2, **dadurch gekennzeichnet, dass** Kohlenstoff in einer Menge von 2-8 Gew.-%, insbesondere 5 Gew.-%, bezogen auf das Gesamtgewicht des Reaktionsansatzes, im Reaktionsansatz eingesetzt wird.

4. Pestschmierstoff gemäß einem der Ansprüche 1 bis 3, **dadurch gekennzeichnet, dass** der Kohlenstoff in Form von Graphit im Reaktionsansatz eingesetzt wird.

5. Verfahren zur Herstellung eines Festschmierstoffs auf Zinnsulfidbasis nach einem der Ansprüche 1 bis 4, **dadurch gekennzeichnet, dass** metallisches Zinn mit Schwefel und Kohlenstoff, jeweils in fein verteilter Form, zu einem Reaktionsansatz vermischt werden, wobei Schwefel in einer überstöchiometrischen Menge, berechnet auf die alleinige Bildung von SnS₂, und Kohlenstoff in einer Menge von 0,5 bis 20 Gew.-%, bezogen auf das Gesamtgewicht des Reaktionsansatzes, im Reaktionsansatz eingesetzt werden, der Reaktionsansatz unter Inertgas oder Luftatmosphäre bei Temperaturen von 200 bis 1500°C für 0,1 bis 6 Stunden umgesetzt wird, und nach Ende der Umsetzung das erhaltene Reaktionsprodukt abgekühlt und vermahlen wird.

6. Verfahren gemäß Anspruch 5, **dadurch gekennzeichnet, dass** der Schwefel in einem stöchiometrischen Überschuss von bis zu 5 %, berechnet auf die alleinige Bildung von SnS₂, im Reaktionsansatz eingesetzt wird.

7. Verwendung eines Festschmierstoffs nach einem der Anspruche 1 bis 4 als Additiv für Reibbelagmischungen, insbesondere Reibbelagmischungen harzgebundener Reibbeläge, vorzugsweise Brems- und Kupplungsbeläge.

8. Verfahren zur Herstellung einer Festschmierstoffkombination auf Zinnsulfidbasis unter Verwendung eines Festschmierstoffs nach einem der Ansprüche 1 bis 4, **dadurch gekennzeichnet, dass** bezogen auf das Gesamtgewicht der Festschmierstoffkombination 2 bis 50 Gew.-% des nach einem der Ansprüche 1-4 erhältlichen Zinnsulfids mit 2 bis 40 Gew. % Graphit, 2 bis 40 Gew.-% Zinksulfid, 2 bis 30 Gew.% Zinn(II)-sulfid, 1 bis 5 Gew.-% freiem Schwefel sowie mit 2 bis 40 Gew.-% eines Erdalkalimetallphosphats oder eines anorganischen Metallphosphats oder Mischungen solcher Phosphate in Pulverform in einer Mischvorrichtung vermischt werden und die Mischung anschließend vermahlen wird.

9. Verfahren gemäß Anspruch 8, **dadurch gekennzeichnet, dass** als Erdalkalimetall- oder Metallphosphat zumindest eine Verbindung aus der Gruppe, die aus Aluminiumphosphat, Calciumphosphat, Eisenphosphat, Magnesiumphosphat und Zinkpyrophosphat oder Mischungen davon besteht, eingesetzt wird.

10. Verwendung einer durch das Verfahren gemäß Anspruch 8 oder 9 erhältlichen Festschmierstoffkombination als Additiv für Reibbelagmischungen, insbesondere Reibbelagmischungen harzgebundener Reibbeläge, vorzugsweise Brems- und Kupplungsbeläge.

## Claims

1. A solid, tin sulfide-based lubricant, obtainable by reaction of metallic tin in finely dispersed form with sulfur and carbon under inert gas or air atmosphere at temperatures of 200 to 1500°C for 0.1 to 6 hours, wherein sulfur in the reaction batch is used in a greater than stoichiometric amount, calculated to the sole formation based on SnS₂, and carbon in the reaction batch is used in an amount of 0.5 to 20 wt.% with respect to the total weight of the reaction batch.

2. The solid lubricant according to claim 1, **characterized in that** the sulfur in the reaction batch is used in a stoichiometric excess of up to 5%, calculated based on the sole formation of SnS₂.

3. The solid lubricant according to claim 1 or 2, **characterized in that** in the reaction batch carbon is used in an amount from 2 to 8 wt.%, in particular 5 wt.% with respect to the total weight of the reaction batch.

4. The solid lubricant according to one of the claims 1 to 3, **characterized in that** in the reaction batch the carbon is used in the form of graphite.

5. A method for the production of a tin sulfide-based solid lubricant according to one of the claims 1 to 4, **characterized in that** metallic tin, sulfur and carbon, each in finely dispersed form, are mixed to a reaction batch, wherein in the reaction batch sulfur is used in a greater than stoichiometric amount, calculated based on the sole formation of SnS₂, and carbon is used in an amount from 0.5 to 20 wt.% relative to the total weight of the reaction batch, the reaction batch is reacted under inert gas or air atmosphere at temperatures from 200 to 1500 °C for 0.1 to 6 hours, and after completion of the transformation the reaction product obtained is cooled and ground.

6. The method according to claim 5, **characterized in that** in the reaction batch the sulfur is used in a stoichiometric excess of up to 5 %, calculated based on the sole formation of SnS2.

7. A use of a solid lubricant according to one of the claims 1 to 4 as an additive for friction liner mixtures, in particular friction liner mixtures of resin-bound friction liners, preferably brake liners and clutch liners.

8. A method for producing a tin sulfide-based solid lubricant combination using a solid lubricant according to any of claims 1 to 4, **characterized in that**, relative to the total weight of the solid lubricant combination, 2 to 50 wt.% of the tin sulfide obtainable according to any of the claims 1 to 4 is mixed with 2 to 40 wt.% graphite, 2 to 40 wt.% zinc sulfide, 2 to 30 wt.% tin(II)-sulfide, 1 to 5 wt.% free sulfur as well as with 2 to 40 wt.% of an earth alkali metal phosphate or an inorganic metal phosphate or mixtures of such phosphates in powder form in a mixing apparatus, and the mixture is subsequently ground.

9. The method according to claim 8, **characterized in that** at least one compound from the group consisting of aluminum phosphate, calcium phosphate, iron phosphate, magnesium phosphate and zinc pyrophosphate or mixtures thereof is used as the earth alkali metal or metal phosphate.

10. A use of a solid lubricant combination obtainable by the method according to claim 8 or 9 as an additive for friction liner mixtures, in particular friction liner mixtures of resin-bound friction liners, preferably brake liners and clutch liners.

## Revendications

1. Lubrifiant solide à base de sulfure d'étain, pouvant être obtenu par la réaction d'étain métallique, sous une forme finement répartie, avec du soufre et du carbone sous gaz inerte ou sous atmosphère d'air à des températures comprises entre 200° et 1500°C pendant une durée de 0,1 à 6 heures, le soufre étant utilisé dans la préparation de réaction en une quantité au moins stoechiométrique, calculée sur la seule formation de SnS₂, et le carbone étant utilisé en une quantité de 0,5 à 20 % en poids, exprimé par rapport au poids total de la préparation réactive.

2. Lubrifiant solide selon la revendication 1, **caractérisé en ce que** le soufre est utilisé dans la préparation de réaction en un excédent stoechiométrique allant jusqu'à 5 %, calculé sur la seule formation de SnS₂.

3. Lubrifiant solide selon la revendication 1 ou 2, **caractérisé en ce que** le carbone est utilisé dans la préparation de réaction en une quantité de 2 - 8 % en poids, notamment de 5 % en poids, par rapport au poids total de la préparation de réaction.

4. Lubrifiant solide selon l'une des revendications 1 à 3, **caractérisé en ce que** le carbone est utilisé dans la préparation de réaction sous forme de graphite.

5. Procédé de fabrication d'un lubrifiant solide à base de sulfure d'étain selon l'une des revendications 1 à 4, **caractérisé en ce que** de l'étain métallique avec du soufre et du carbone, respectivement sous une forme finement répartie, sont mélangés pour former une préparation de réaction, le soufre étant utilisé dans le préparation de réaction dans une quantité au moins stoechiométrique, calculée sur la seule formation de SnS₂, et le carbone étant utilisé en une quantité de 0,5 à 20 % en poids par rapport au poids total de la préparation de réaction, **en ce que** la préparation de réaction est amenée à réagir, sous gaz inerte ou sous atmosphère d'air à des températures de 200 à 1500°C pendant une durée de 0,1 à 6 heures, et **en ce qu'**à la fin de la conversion le produit de réaction obtenu est refroidi et broyé.

6. Procédé selon la revendication 5, **caractérisé en ce que** le soufre est utilisé dans la préparation de réaction dans un excédent stoechiométrique allant jusqu'à 5 %, calculé sur la seule formation de SnS₂.

7. Utilisation d'un lubrifiant solide selon l'une des revendications 1 à 4 comme additif aux mélanges destinés aux garnitures de friction, notamment mélanges destinés aux garnitures de friction résineuses, de préférence garnitures de frein et d'embrayage.

8. Procédé de fabrication d'une combinaison de lubrifiants solides à base de sulfure d'étain en utilisant un lubrifiant solide selon l'une des revendications 1 à 4, **caractérisé en ce que** par rapport au poids total de la combinaison de lubrifiants solides, 2 à 50 % en poids d'un sulfure d'étain pouvant être obtenu selon l'une des revendications 1-4 sont mélangés avec 2 à 40 % en poids de graphite, 2 à 40 % en poids de sulfure d'étain, 2 à 30 % en poids de sulfure d'étain (II), 1 à 5 % en poids de soufre libre et 2 à 40 % en poids d'un phosphate de métaux alcalinoterreux ou d'un phosphate de métallique anorganique ou des mélanges de tels phosphates en forme de poudre sont mélangés dans un dispositif mélangeur, le mélange étant ensuite broyé.

9. Procédé selon la revendication 8, **caractérisé en ce qu'**en tant que phosphate de métaux alcalinoterreux ou phosphate métallique on peut utiliser un composé du groupe comprenant le phosphate d'aluminium, le phosphate de calcium, le phosphate de fer, le phosphate de magnésium et le pyrophosphate de zinc ou des mélanges de ceux-ci.

10. Utilisation d'une combinaison de lubrifiants solides pouvant être obtenue à l'aide du procédé selon la revendication 8 ou 9, en tant qu'additif aux mélanges destinés aux garnitures de friction, notamment aux mélanges destinés aux garnitures de friction résineuses, de préférence aux garnitures de freins et d'embrayages.
